# EUROPEAN PATENT APPLICATION

(11) **EP 4 775 313 A2**
(43) Date of publication of application: **15.07.2026**
(21) Application number: 26179847.4
(22) Date of filing: 25.07.2024
(51) Int. Cl.: B05B 1/26

(54) **A METHOD OF MANUFACTURING A NOZZLE ASSEMBLY, COMPRISING WEAKENING A WAFER AT AT LEAST TWO FOCAL ZONES IN THE DEPTH DIRECTION BY FOCUSING A LASER BEAM**

(30) Priority: 12.10.2023 NL 2036015
(62) Divisional of application: 24749334.9
(71) Applicant: Micronit Holding B.V., 7521 PV Enschede (NL)
(72) Inventor: OONK, Johannes, 7521 PV Enschede (NL); BOSMAN, Mathijs Christian, 7521 PV Enschede (NL); VERMEER, Rolf, 7521 PV Enschede (NL); BLOM, Marko Theodoor, 7521 PV Enschede (NL)
(74) Representative: Arnold & Siedsma

(57) **Abstract**

The invention relates to a method of manufacturing at least one nozzle assembly for atomising a fluid. The method comprises a) providing the at least one nozzle assembly pre-arranged in a wafer; and b) separating the at least one nozzle assembly from remaining wafer material. According to the invention, step b) comprises locally weakening the wafer between the at least one nozzle assembly and the remaining wafer material at at least two focal zones in the depth direction by the focusing of a laser beam. The invention also relates to a composite structure for forming such nozzle assemblies, the composite structure comprising at least two weakened zones in the depth direction. Finally, a nozzle assembly manufactured with the described method is claimed.

## Description

### Field of invention

The field of invention relates to the nozzle assembly. Various embodiments in this document relate to a method of manufacturing at least one nozzle assembly, a composite structure, and a nozzle assembly.

### Background

The nozzle assembly in the present disclosure is typically an atomising nozzle which produces a spray of fine droplets suitable for example for the administration of a medicament by inhalation.

It is known (e.g. from WO 91/14468) that fluids can be caused to form very fine droplets on being forced through narrow nozzles at high pressure, thereby creating two jets of liquid which impinge on each other to create the droplets. An important area of application for the equipment according to WO 91/14468 is the production of aerosols for inhalation therapy. Demanding requirements are imposed among other things, on the fineness of the droplets; it has been found during numerous investigations that a considerable number of droplets must have a size less than 6 µm in order that a sufficient quantity of the medicine can reach sufficiently deep into the lungs.

WO 94/07607 teaches a method for producing a plurality of nozzles. According to that document a plurality of structure base plates are formed on a wafer of silicon. Then the structure is etched using a plasma containing reactive ions so that grooves are formed. Afterwards the composite structure is divided into individual units (e.g. squares) by a fast rotating diamond circular saw, wherein the intake openings and the outlet openings are opened up.

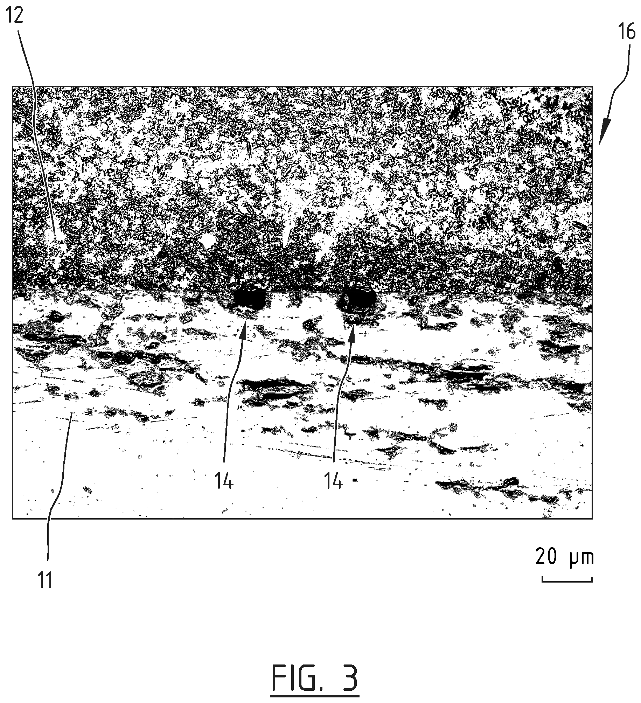

This method is however not entirely satisfactory. The intake openings and outlet openings have a small dimension, for example below ten microns. When a diamond saw is used to divide the composite structure a high quantity of debris is created, as seen in Fig. 3 of the present application. This debris may clog or obscure the intake openings or the outlet openings or the groove structure in WO 94/07607. This turns a piece of nozzle into scrap which cannot be subsequently used, and must therefore be rejected.

To resolve the issue of debris during the manufacturing of nozzles, US 7,867,495 proposes filling the groove structures with a filling medium. The temperature is then reduced so that the filling medium solidifies in the groove structures. Following this, the plate-shaped composite structure containing the solidified filling medium is cut up by sawing it with a very high speed diamond circular saw. The filling medium is then removed from the groove structures with the temperature of the filling medium being increased. This can mean that the filling medium is drained or evaporated from the groove structures.

Although this method decreases the rejection rate by preventing the adverse effects of debris, this method has its own inconveniences. Removing the filling medium from the groove structure is sometimes incomplete such that a part of the filling medium remains in the nozzle device, which then solidifies again and blocks some of the grooves. Furthermore, the use of a filling medium and the need to increase the temperature of the filling medium to remove it complicates the manufacturing process.

### Summary of the invention

One of the objectives of the present disclosure is to reduce the amount of debris created during the manufacturing of a plurality of microfluidic devices such as nozzle assemblies. Another objective of the present disclosure is to reduce the rejection rate during the manufacturing. A further objective of the present disclosure is to simplify the manufacturing process.

According to the first aspect of the disclosure, a method of manufacturing at least one nozzle assembly for atomising a fluid is disclosed. Each nozzle assembly comprises a base layer, a cover layer stacked on top of the base layer in a depth direction, and at least two nozzle outlets in the base layer configured to release the fluid passing through the nozzle assembly in the form of mutually impinging jets of the fluid. The method comprises step a) of providing the at least one nozzle assembly pre-arranged in a wafer optionally comprising multiple pre-arranged nozzle assemblies. The method also comprises step b) of separating the at least one nozzle assembly from remaining wafer material. Step b) comprises locally weakening the wafer between the at least one nozzle assembly and the remaining wafer material at at least two focal zones in the depth direction by the focusing of a laser beam.

Thanks to these features it would no longer be needed to use a saw to separate one nozzle assembly from the remaining wafer material. The amount of debris created during the separation is accordingly significantly reduced or even avoided. The outlet openings and the groove structure of a nozzle assembly are much less likely to be clogged, and the rejection rate during manufacturing is significantly decreased.

Furthermore, by weakening the wafer at at least two focal zones in the depth direction, separating one nozzle assembly from the remaining wafer material is made easier. Less external force is needed for the separation. In addition, the nozzle assembly and/or the remaining wafer material is less susceptible to breaking during separation.

The weaking may take place by a local introduction of energy caused by the laser beam being focused locally.

Here, the at least two focal zones in the depth direction are created by the focusing of the same single laser beam, for instance subsequently.

According to some embodiments weakening the wafer comprises weakening the base layer at at least two focal zones in the depth direction, and/or weakening the cover layer at at least two focal zones in the depth direction. In relatively thin layers, it may be sufficient to weaken each layer at only a single depth.

With at least two zones of the base layer and/or of the cover layer weakened in the depth direction, separating the base layer and/or the cover layer is made easier. Furthermore, the amount of debris created at the level of the base layer and/or at the level of the cover layer during separation is much reduced.

The skilled person would select the number and/or the location of the focal zones in the depth direction according to different manufacturing requirements so that breaking the base layer and/or the cover layer is easy enough and/or can be done without undermining the structural integrity of the base layer and/or the cover layer belonging to a nozzle assembly outside of the plane along which separation is desired.

According to some embodiments the laser beam travels approximately along, preferably in, the depth direction.

In this way the weakened zones are aligned in the depth direction. The depth direction may be perpendicular to the upper and lower surfaces of the wafer. The nozzle assembly is subsequently separated from the remaining wafer material perpendicularly to the upper and lower surfaces of the wafer. The separated nozzle assembly can therefore be used directly without requiring an additional step to modify the separation surface. Here, in the depth direction means the direction extending perpendicularly to the main surfaces of the base layer and the cover layer (the surfaces in which these two layers have the greatest dimension), pointing in the direction in which laser penetrates the wafer, typically from the cover layer to the base layer. Along the depth direction means along the direction parallel to the depth direction, but can point from the cover layer to the base layer or from the base layer to the cover layer.

According to some embodiments during the weakening of the base layer, the laser beam travels through the cover layer.

With this feature it is not necessary to weaken the cover layer by a laser beam travelling a direction (for example in the direction from the cover layer to the base layer), then switch the direction of the laser beam so that the base layer is weakened by a laser beam travelling in the opposite direction (for example in the direction from the base layer to the cover layer). Instead, the base layer and the cover layer can be weakened by the laser beam(s) travelling in a single direction, here from the cover layer to the base layer.

In general, the laser would thus be applied from the top for both the base layer and the cover layer, however it is possible to apply the laser from the bottom for the base layer, and then from the top for the cover layer. In that case, a risk of the laser inadvertently influencing the cover layer while weakening the base layer may be avoided.

According to some embodiments when the laser beam travels through the cover layer it does not substantially change mechanical properties of the cover layer.

In this way when a laser beam travels though the cover layer, typically when it weakens the base layer, it is not required to take into account the effect of this laser beam on the cover layer and make adjustments beforehand or afterwards. The design and the implementation of the manufacturing process is therefore simplified.

The laser does not substantially change the mechanical properties of the cover layer because the cover layer is substantially transparent to the laser so that the laser does not interact with the cover layer. In addition or alternatively, the laser does not substantially change the mechanical properties of the cover layer because the laser beam does not focus in the cover layer. The fact that the laser beam does not substantially change the mechanical properties of the cover layer may be due to these two factors combined, because a layer is unlikely to be totally transparent to a laser beam.

The mechanical properties can include at least one of the following: the Young's modulus of the material, yield strength, and crystal structure.

According to some embodiments step b) is repeated along a line perpendicular to the depth direction so that the weakened zones define a weakened plane.

With a plane weakened, it would be easier to separate a nozzle assembly from the remaining wafer material, for instance by breaking along the plane. The weakened plane is a plane, preferably flat, defined by the collection of weakened zones.

According to some embodiments the weakening of the wafer at at least two of the at least two focal zones is carried out simultaneously.

Simultaneous weakening of the wafer accelerates the manufacturing process. It can also be easier to maintain the consistency during the weakening of two focal zones, and/or may require less adjusting of optical devices. Simultaneously weaking may take place by applying a self-refocusing laser. Technologies employing this technique are known to the skilled person, for instance as laser filament propagation.

According to some embodiments the focal zones comprise a first focal zone and a second focal zone separated in the propagation direction of the laser beam from the first focal zone by a defocused zone where laser is defocused, wherein the laser beam self-focuses in the first and the second focal zones.

This phenomenon is known for instance as filament propagation. By using this phenomenon it is not necessary to use complex optical instruments to create different focal zones separated by areas where laser is defocused. Instead, the alternation of focal zone - defocused zone - focal zone is created by inherent properties during the interaction between the laser beam and the wafer material. It is therefore much easier to create the two or more weakened zones. More details on the filament propagation can for example be found in EP 2 837 462 A2, EP 2 898 982 A2, CN 111116033 A, the methods described in which may be used in the present application.

According to some embodiments at least two of the at least two focal zones are weakened sequentially at two different depths, in respectively a first pass of the laser and a second pass of the laser.

With different passes of the laser it is easier to adjust the properties of different focal zones on different passes, for example when greater weakening needs to be made on a first pass than on a second pass. Properties of the laser beams can be tailored to the specific requirements desirable at different depths. In addition or alternatively, the timing of the weakening of two different depths can be individually changed according to a manufacturer's wish, for example there needs to be a relatively long interval between two passes of a laser beam.

Each pass can create a single weakened zone, or multiple weakened zones for instance by employing filament propagation. Multiple passes can be used to create multiple weakened zones throughout the entire depth of a relatively thick layer relatively easily and/or with fewer requirements on the laser used.

According to some embodiments the laser beam penetrates the base layer or the cover layer deeper on the first pass than it does on the second pass subsequent to the first pass such that the focal zones created on the first pass of the laser beam is deeper than the focal zones created on the second pass.

By moving the laser beam shallower on a subsequent pass than on a previous pass, the laser beam on a subsequent pass would not be influenced substantially by the focal zones created earlier, on a previous pass.

According to some embodiments the base layer is made of a first material, for example optionally single-crystal silicon, and the cover layer is made of a second material, for example glass, the second material having a different refractive index than that of the first material.

Thanks to these features each layer can be treated with a step more adapted to this specific layer. The step may be more specifically adapted by selecting or employing a different laser source, and/or different optical instruments.

According to some embodiments the weakening comprises: weakening the base layer by focusing a first laser beam; and weakening the cover layer by focusing a second laser beam different from the first laser beam. Preferably the base layer is weakened first.

In this manner the base layer and/or the cover layer can be weakened by laser beams which are better adapted to weaken the respective layer, for instance to have a quicker weakening or a weakening of an appropriate intensity to facilitate subsequent breaking without damaging the part of the layer which is not intended to be broken.

Under this possibility preferably the cover layer is substantially transparent to the first laser beam. In this way when the base layer is being weakened the mechanical properties of the cover layer remain substantially unchanged by the first laser beam. Preferably the optical properties also remain substantially unchanged.

Preferably the second laser beam is substantially defocused in the base layer, i.e. there is no focal zone in the base layer when the second laser beam weakens the cover layer. In addition or alternatively the base layer is substantially transparent to the second laser beam. In this way when the cover layer is being weakened the second laser beam does not alter the mechanical properties of the base layer.

According to some embodiments the second laser beam has different properties than the first laser beam, the properties include at least one or a combination of: the frequency of the laser beam, the intensity, the pulse frequency, a pulse duration, a dimension of the laser beam such as the diameter, the pulse pitch, the average power density. For instance, the first laser may have a higher frequency, a higher intensity, a higher pulse frequency, a longer pulse duration, a larger dimension of the laser beam, a wider pulse pitch, a higher average power density, or vice versa.

The intensity here may be defined as the energy of the laser beam per pulse. The average power density here is measured per surface area. It for instance has the unit of W/cm².

According to some embodiments the base layer and the cover layer are made of the same material, for example glass or silicon.

By using the same material for the base layer and the cover layer, the treatment of these two layers can be identical and is therefore simplified.

It is principally possible, and envisioned particularly but not exclusively in the case of identical materials for the base layer and the cover layer, that both layers are provided with channels to create the required nozzle assembly, preferably in a mirrored pattern.

According to some embodiments the base layer and cover layer are weakened by laser beams of identical or similar physical properties, such as wavelength, intensity, pulse durations, the pulse frequency, pulse duration, a dimension of the laser beam such as the diameter, the pulse pitch, the average power density, for instance laser beams from the same laser source.

By weakening the base layer and the cover layer by identical or similar laser beams the step of weakening is simplified. In particular, it is no longer necessary to adjust the property of the laser beams according to the different properties of different layers.

According to some embodiments the method further comprises breaking the base layer and/or the cover layer along the at least two focal zones.

When the base layer or the cover layer is broken along the focal zones it is no longer necessary to separate a nozzle assembly from the remaining wafer material by sawing. The amount of debris created during the breaking is significantly reduced. Accordingly the scrap rate is reduced as well.

In addition, the total time it takes to weaken a layer then break it along the weakened zones is typically shorter than it does for sawing the nozzle assemblies apart. The time needed for the manufacturing is therefore reduced.

According to some embodiments the breaking comprises applying a compressive force in the cover layer and/or an expansive force in the base layer.

Under this way of applying the forces, the base layer breaks first before the cover layer along the desired breaking plane, without causing damage to the base laser. This method is particularly advantageous if the base layer comprises silicon and the cover layer comprises glass.

According to some embodiments the interfaces between crystal lattices of the base layer and/or of the cover layer extend approximately in the depth direction.

When the interfaces between crystal lattices have an angle with the depth direction, the breaking surface may also have an angle with the depth direction. As it is preferred that the separated nozzle assembly has a breaking surface extending perpendicularly to the main wafer surfaces, this inclined breaking surface would need additional treatment to make it parallel to the depth direction. With the interfaces between crystal lattices extending approximately in the depth direction it is more likely that the breaking surface also extends in the depth direction. A subsequent step processing the broken part nozzle assembly would no longer be needed.

According to some embodiments the method further comprises avoiding weakening an undisturbed zone by the laser beam in the cover layer above the at least two nozzle outlets in the depth direction and/or an undisturbed zone in the base layer below the at least two nozzle outlets in the depth direction.

By avoiding weakening the undisturbed zone above the nozzle outlets, potential damages to the nozzle outlets and potential debris in the nozzle outlets when the laser beam passes above the nozzle outlets can be prevented.

Generally the characteristics of the nozzle outlets are defined during the design phase and it is preferred that the manufactured nozzle outlets are identical to the designed nozzle outlets. If the laser beam modifies the property of a zone above the nozzle outlets in the depth direction, this modification may then alter a characteristic of the nozzle outlets. By avoiding awakening the undisturbed zone in the cover layer above the nozzle outlets, the manufactured nozzle outlets can remain approximately identical to what are designed. In addition or alternatively, if the laser beam modifies the property of a zone below the nozzle outlets in the depth direction, it may need to pass through the nozzle outlets above it first, modifying a characteristic of the nozzle outlets which is undesirable. By avoiding weakening the undisturbed zone in the base layer below the nozzle outlets the manufactured nozzle outlets can remain approximately identical to what is designed.

According to some embodiments the method further comprises locally weaking the cover layer above the undisturbed zone as seen in the depth direction.

This makes sure that there is still a weakened area in the cover layer above the nozzle outlets when there is an undisturbed zone. This means that the cover layer can still be sufficiently weakened even when the undisturbed zone is present.

According to some embodiments the undisturbed zone has at least the same size, preferably at least 1.5 times, more preferably at least 2 times, even more preferably at least 3 times the size of the nozzle outlets in the depth direction.

The sufficient size of the undisturbed zone makes sure that the properties of the nozzle outlets remain substantially unchanged during weakening by the laser beam(s).

According to some embodiments after the breaking at least one of the two nozzle outlets opens up to the outside of the nozzle assembly.

In this manner no additional step, such as sawing, is needed to open up at least one of the two nozzle outlets after breaking. The amount of debris during manufacturing can be significantly reduced.

According to some embodiments the method as described above is used for manufacturing at least two of the nozzle assemblies. Each nozzle assembly comprises at least one fluid inlet configured to receive fluid. The fluid inlet and the two nozzle outlets define a fluid flow direction. At least two of the nozzle assemblies are connected end-to-end in the fluid flow direction. The method comprises opening the at least one fluid inlet and/or the nozzle outlets, preferably simultaneously, by separating two of the nozzle assemblies from each other.

When the at least one fluid inlet and/or the nozzle outlets are opened up when two nozzle assemblies are separated from each other, no additional step is needed, in particular no sawing is needed, to create the fluid inlet and/or the nozzle outlets. Accordingly the amount of debris created at the fluid inlet and/or the nozzle outlets is significantly reduced. According to the preferred embodiment where when two of the nozzle assemblies are separated from each other, at least one fluid inlet and the nozzle outlets are opened up simultaneously, nozzle assemblies can be manufactured by simple separation of the wafer (such as by breaking) without the need of additional steps such as sawing. In this way the creation of debris can be completely avoided.

According to the second aspect of the disclosure, a composite structure is disclosed. The composite structure comprises a base layer, a cover layer stacked on the base layer in a depth direction, and at least two channel structures each defined in a different part of the composite structure in a plan view. The different parts are integral to the same base layer and cover layer. Each channel structure is suitable for forming, after separation from the other, a nozzle assembly for atomising a fluid. Each nozzle assembly comprises at least two nozzle outlets in the base layer configured to release the fluid passing through the nozzle assembly in the form of mutually impinging jets of the fluid. Each nozzle assembly comprises at least one fluid inlet. Each channel structure comprises channels corresponding to the at least two nozzle outlets and at least one fluid inlet of a respective nozzle assembly. The composite structure comprises at least two weakened zones in the depth direction.

With the weakened zones present inside the composite structure, the latter can be broken into different parts with a reduced amount of debris created during manufacturing. The products made from the composite structure can accordingly have a better quality. In particular, the nozzle outlets of a nozzle assembly configured for atomising a fluid are generally tiny. By reducing the amount of debris created during the manufacturing, the chances that debris gets into the nozzle outlets are reduced, reducing the scrap rate significantly.

At least one of the weakened zones is weakened by a laser beam as described above.

According to some embodiments a breaking plane defined by the at least two weakened zones intersects the channel structures in such a way that upon breaking the base layer and the cover layer along the breaking plane, the at least two nozzle outlets of at least one nozzle assembly opens up and/or the at least one fluid inlet of another nozzle assembly opens up.

In this manner, the nozzle outlets and/or the fluid inlet can be readily obtained after breaking along the breaking plane without any additional step such as sawing. The amount of debris created in the region of nozzle outlets and/or the fluid inlet can thus be reduced or even eliminated.

According to some embodiments the channel structures are arranged end-to-end in a fluid flow direction, preferably in fluidic connection, wherein the channels corresponding to the at least two nozzle outlets of a first nozzle assembly and/or the channels corresponding to the at least one fluid inlet of a second nozzle assembly intersect the breaking plane and extend beyond it on both sides of the breaking plane.

Thanks to this layout, it can be sure that the nozzle outlets of the first nozzle assembly and/or the fluid inlet of the second nozzle assembly are opened up after breaking along the breaking plane.

According to some embodiments at least one of the channel structures comprises a filter between the at least one fluid inlet and the at least two nozzle outlets.

According to the third aspect of the disclosure, a nozzle assembly obtained by the method as described above is disclosed.

The features of one aspect can be combined with the features of any other aspect.

### Brief description of the figures

The accompanying drawings are used to illustrate presently preferred non-limiting exemplary embodiments of the method of manufacturing, the composite structure, and the nozzle assembly of the present invention. The above and other advantages of the features and objects of the invention will become more apparent and the invention will be better understood from the following detailed description when read in conjunction with the accompanying drawings, in which:
Fig. 1 is the perspective view of a nozzle assembly known in the prior art;
Fig. 2 is the top view of another nozzle assembly known in the prior art, with detailed views on the groove structure between the inlet and the nozzle outlets shown in Fig. 2a and the nozzle outlets shown in Fig. 2b;
Fig. 3 is the photo of a nozzle assembly after being separated from another nozzle assembly by a sawing process known in the prior art, the photo being taken in the direction facing the breaking plane;
Fig. 4 is the top view of a part of the composite structure comprising at least two nozzle assemblies before being weakened by a laser beam, the line intersecting the fluid inlets and the nozzle outlets being the intended breaking plane;
Figs. 5a - 5c illustrate the steps of weakening and subsequent breaking a nozzle assembly according to an embodiment of the present disclosure, wherein at least two of the at least two focal zones are weakened sequentially at two different depths, in respectively a first pass of the laser and a second pass of the laser;
Figs. 6a - 6b are the photos of some results of the weakening obtained according to the first embodiment of the present disclosure, where the weakening of the wafer at at least two of the at least two focal zones is carried out simultaneously, the photos being taken in a direction parallel to the depth direction;
Figs. 7a - 7b are the photos of some results obtained according to the first embodiment of the present disclosure, the photos being taken in a direction parallel to the depth direction;
Figs. 8a - 8b illustrate the steps of weakening a layer according to the second embodiment of the present disclosure, where at least two of the at least two focal zones are weakened sequentially at two different depths, in respectively a first pass of the laser and a second pass of the laser;
Figs. 9a - 9b are the photos of some results of the weakening obtained according to the second embodiment of the present disclosure, the photos being taken in a direction parallel to the depth direction;
Figs. 10a - 10b are two front view scans of a nozzle assembly broken off from another nozzle assembly obtained using a scanning electron microscope, the scans being taken in a direction perpendicular to the depth direction and facing the nozzle outlets;
Fig. 11 is the top view of a nozzle assembly after it has been broken off from the remaining wafer material on its four sides; and
Fig. 12 is the top view of the composite structure according to one embodiment of the present disclosure, each nozzle assembly having being separated from the other nozzle assemblies;
Fig. 13a is a local top view of the composite structure of Fig. 12 near the breaking plane after one nozzle assembly has been separated from another nozzle assembly, and Fig. 13b is a close-up top view of the nozzle outlets in Fig. 13a.

### Detailed description of embodiments

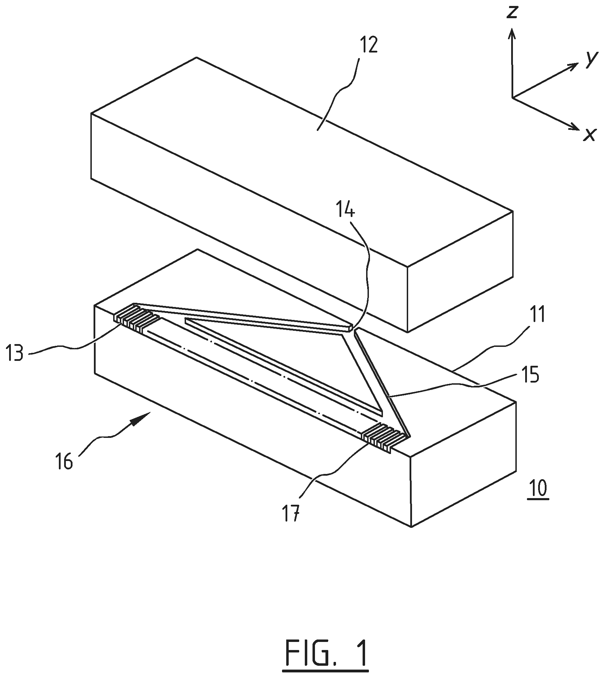

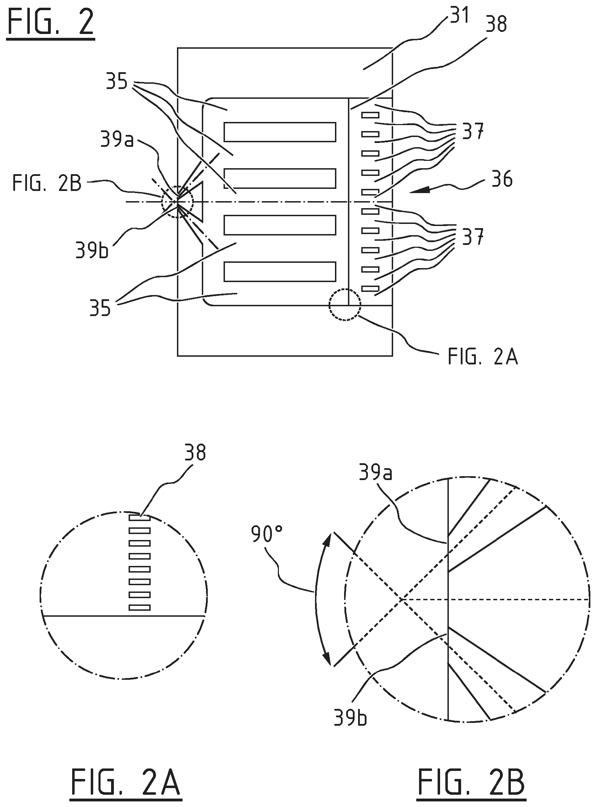

Fig. 1 shows a nozzle assembly 10 for atomising a fluid. The nozzle assembly 10 comprises a base layer 11 and a cover layer 12 stacked on top of the base layer 11 in a depth direction. In Fig. 1 the depth direction is the Z-direction. The nozzle assembly 10 comprises at least one fluid inlet 13 configured to receive fluid. The nozzle assembly 10 comprises at least two nozzle outlets 14 in the base layer 11 configured to release the fluid passing through the nozzle assembly 10 in the form of mutually impinging jets of the fluid, such as shown in Fig. 2b which will be described further below. According to an alternative not covered by the claims, the nozzle assembly 10 has one nozzle outlet 14. The fluid inlet 13 and the two nozzle outlets 14 define a fluid flow direction Y perpendicular to the depth direction Z.

The base layer 11 for example has a thickness in the depth direction between 450 microns and 900 microns, preferably between 600 microns and 750 microns, more preferably between 650 microns and 700 microns. The nozzle outlets 14 for example have a dimension in the depth direction between 1 micron and 10 microns, probably between 3 microns and 8 microns, more preferably between 5 microns and 6 microns.

The nozzle assembly 10 comprises a channel structure 15 connecting the at least one fluid inlet 13 with the at least two nozzle outlets 14. The channel structure 15 is configured to pass the fluid from the at least one fluid inlet 13 to the at least two nozzle outlets 14 of the nozzle assembly 10. The channel structure 15 for example comprises a plurality of channels.

The nozzle assembly 10 comprises a breaking plane 16, as will be explained below.

Preferably at least one of the channel structure(s) 15 comprises a filter 17 between the at least one fluid inlet 13 and the at least two nozzle outlets 14. The filter 17 is configured to filter the fluid passing through the channel structure 15 so that particles having a diameter greater than a predetermined threshold do not reach the at least two nozzle outlets 14.

The nozzle assembly 10 in the present disclosure is for example one of the embodiments in the patent application WO 94/07607.

According to some embodiments the base layer 11 is made of a first material, for example single-crystal silicon, and the cover layer 12 is made of a second material different from the first material, for example glass. The second material has a different refractive index than that of the first material.

Alternatively the base layer 11 and the cover layer 12 are made of the same material, for example glass or silicon.

According to some embodiments the interfaces between crystal lattices of the base layer 11 and/or of the cover layer 12 extend approximately in the depth direction.

According to the embodiment in Fig. 1 the channel structure of 15 is entirely located in the base layer 11. This is to say that the lower surface of the cover layer 12 which faces the base layer 11 is approximately flat with no protrusion or groove. According to an alternative not shown in the figures, the channel structure 15 is located in the base layer 11 and the cover layer 12. This is for example the case when the base layer 11 and cover layer 12 are made of the same material, for example made of glass.

Fig. 2 shows part of a nozzle assembly 30 in which the two-stage filter 37, 38 and five parallel channels 35. There are twin nozzle outlets 39a/39b. When seen from the breaking plane 36, a coarser filter with grooves 37 is followed by a finer filter 38, which is shown in a cut-out sectional drawing on a larger scale in Fig. 2a. The filter 38 communicates with the nozzle outlets 39a/39b via the channels 35. The right angles disposed between the channels 35 support the cover layer (not shown) and reinforce its connection to the base layer 31. As can be seen from the enlarged drawing in Fig. 2b, the twin nozzle outlets 39a/39b direct two jets at an angle of 90° relative to each other. Due to the collision of the jets, particularly good atomisation is obtained. The twin nozzle outlets can be modified in various ways. Thus, both jets can, if so desired, be oriented towards each other at a more acute angle or at a more obtuse angle (about 20° to 160°, preferably 60° to 150° and more preferably 90° to 120°). In addition the cross-section of the nozzle outlets can be selected differently; for example the strong tapering of the outlets 39a/39b in Figs. 2, 2a, may be dispensed with. As illustrated in Fig. 2b, it is desirable for the jets to impinge a slight distance away from the nozzle outlets.

Fig. 3 shows the breaking plane 16 of a nozzle assembly 10. The lower part is the base layer 11 and the upper part is the cover layer 12. Two nozzle outlets 14 located in the base layer 11 are visible near the interface between the base layer 11 and the cover layer 12. As seen in Fig. 3 debris created when a nozzle assembly 10 is sawn off from the rest of the material along the breaking plane 16 obscures the nozzle outlets 14.

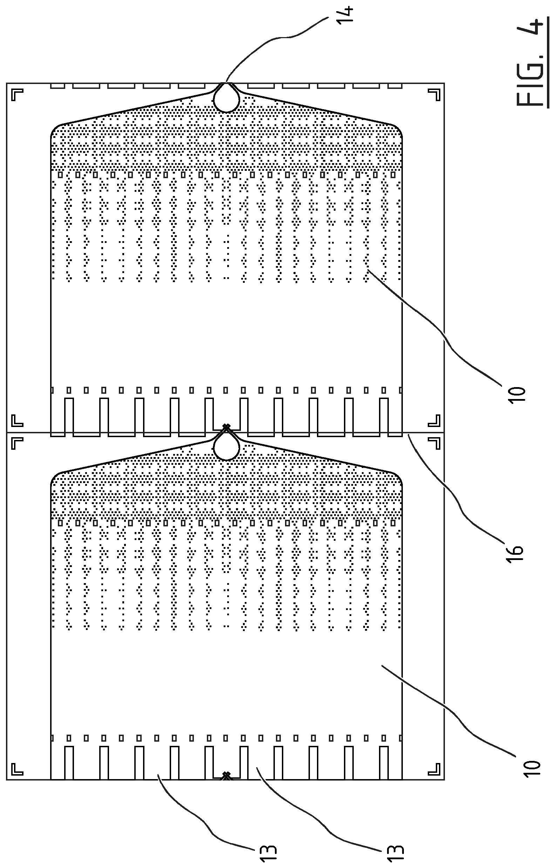

According to the present disclosure, the method of manufacturing comprises first providing the at least one nozzle assembly 10 pre-arranged in a wafer. The wafer optionally comprises multiple pre-arranged nozzle assemblies 10, as seen in Fig. 4 which shows two nozzle assemblies 10 arranged in the fluid flow direction.

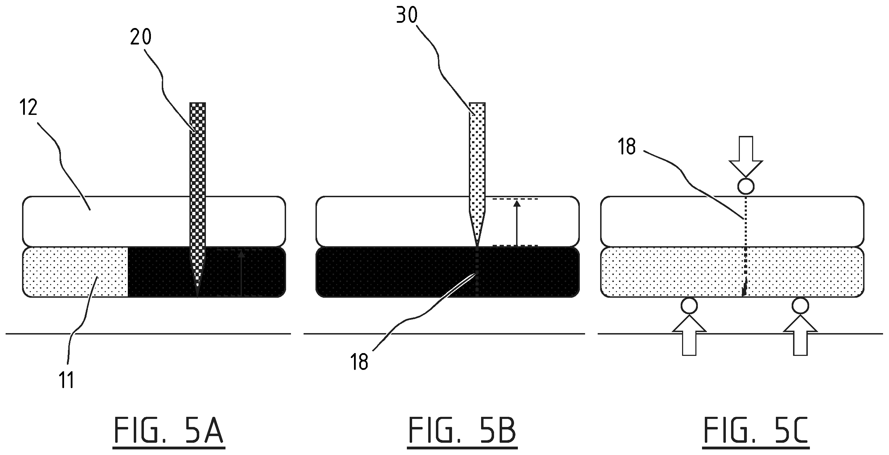

Then a laser beam 20; 30 locally weakens the wafer between the at least one nozzle assembly 10 and the remaining wafer material at at least two focal zones in the depth direction by the focusing of the laser beam. Figs. 5a - 5c show the laser beam making two sequential passes over the wafer, with Fig. 5a showing the laser beam making the first pass and Fig. 5b showing the laser beam making the second pass, and Fig. 5c showing the breaking of the wafer.

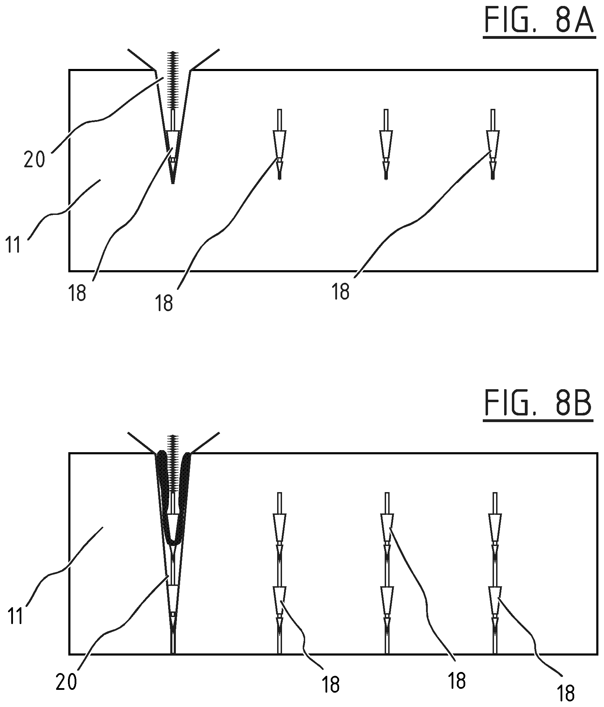

According to some embodiments, such as shown in Figs. 5a - 5c and 8a - 8b, at least two of the at least two focal zones 18 (visible in Figs. 5a - 5c as dots along the depth direction) are weakened sequentially at two different depths, in respectively the first pass of a laser beam and the second pass of a laser beam. According to the embodiment shown in Figs. 5a - 5c the first pass of the first laser beam 20 weakens the base layer 11 and the second pass of the second laser beam 30 (which may have an identical or different physical property from the first laser beam 20) weakens the cover layer 12. According to some embodiments such as the one shown in Figs. 5a - 5c, during the weakening of the base layer 11, the laser beam travels through the cover layer 12. Preferably when the laser beam weakens the base layer 11 and travels through the cover layer 12 it does not substantially change mechanical properties of the cover layer 12.

According to some embodiments such as the one shown in Figs. 8a - 8b, both the first and second passes of the laser beam 20 weaken the base layer 11 at at least two focal zones 18 in the depth direction. According to an alternative not shown in the figures both the first and second passes of the laser beam weaken the cover layer 12 at at least two focal zones 18 in the depth direction. Filament propagation may not take place in all types of materials, and therefore the laser beam may only weaken one particular layer through the phenomenon of filament propagation (in a single pass or in at least two consecutive passes).

Preferably, the laser beam penetrates the base layer 11 or the cover layer 12 deeper on the first pass than it does on the second pass subsequent to the first pass such that the focal zones 18 created on the first pass of the laser beam is deeper than the focal zones created on the second pass. Here, the word 'deep' is measured from the surface of the cover layer 12 facing away the base layer 11 in the direction pointing towards the base layer 11.

According to a preferred embodiment, the laser beam which weakens the cover layer 12 made of glass does not penetrate the cover layer 12 so as to reach the base layer 11 and/or the nozzle outlets 14. This could aid in preventing chipping i.e. small pieces of material from the base or cover layer breaking off.

According to some embodiments the weakening of the wafer at at least two of the at least two focal zones 18 in the depth direction is carried out simultaneously. This can be achieved for example by the phenomenon of filament propagation as explained above. The two focal zones 18, which are separated in the propagation direction of the laser beam by a defocused zone, may locate both in the base layer 11, or both in the cover layer 12, or one in the base layer 11 and the other in the cover layer 12.

In the example shown in Figs. 5a - 5c, when the laser beam makes the first pass and/or the second pass it weakens the wafer (one focal zone 18 is in the base layer 11 and another focal zone 18 is in the cover layer 12; or two focal zones 18 are both in the base layer 11; or two focal zones 18 are both in the cover layer 12) at at least two focal zones 18 in the depth direction simultaneously. According to some other embodiments when the laser beam makes the first pass and/or the second pass it weakens the wafer at a single depth.

Preferably, the step of locally weakening the wafer between the at least one nozzle assembly 10 and the remaining wafer material at at least two focal zones 18 in the depth direction by the focusing of a laser beam is repeated along a line perpendicular to the depth direction so that the weakened zones 40 defined a weakened plane. Under the coordinate system indicated in Fig. 1 the weakened plane extends in the plane defined by the X-Z direction.

When the base layer 11 and the cover layer 12 are made of two different materials, the weakening preferably comprises: weakening the base layer 11 by focusing a first laser beam 20; and then weakening the cover layer 12 by focusing a second laser beam 30 different from the first laser beam 20. The second laser beam 30 for example has different properties than the first laser beam 20, the properties include at least one or a combination of: the frequency of the laser beam, the intensity, the pulse frequency, a pulse duration, a dimension of the laser beam such as the diameter, the pulse pitch, the average power density.

When the base layer 11 and the cover layer 12 are made of the same material, the base layer and cover layer are preferably weakened by laser beams of identical or similar physical properties, such as wavelength, intensity, pulse durations, the pulse frequency, a dimension of the laser beam such as the diameter, the pulse pitch, the average power density, for instance laser beams from the same laser source.

Afterwards the at least one nozzle assembly 10 is separated from remaining wafer material. This comprises breaking the base layer 11 and/or the cover layer 12 along the at least two focal zones 18, for example along the weakened plane. According to the embodiment shown in Fig. 5c the breaking comprises applying a compressive force in the cover layer 12 and/or an expansive force in the base layer 11. Put in another way the wafer is bent upwards towards the cover layer 12. Alternatively, the base layer 11 and the cover layer 12 are torn apart by forces applied in the -Y and +Y directions.

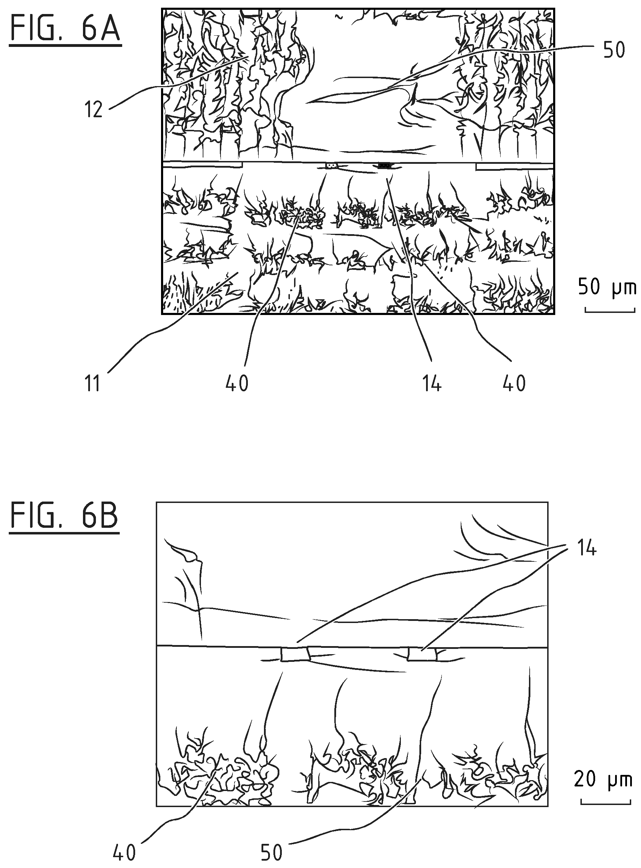

The result of weakening by the laser beam according to the first embodiment of the present disclosure is shown in Figs. 6a - 6b. Figs. 6a - 6b are taken in the X-Z plane in the -Y direction, with Fig. 6b being a detailed view of Fig. 6a. In these pictures, the weakening of the wafer at at least two of the at least two focal zones 18 is carried out simultaneously. The two black rectangles in the middle of Figs. 6a - 6b are the nozzle outlets 14. The areas with a uniform lighter colour represent the zones which are not weakened by the laser beam. In contrast, the darker areas with aggregated cracks extending approximately in the depth direction represent the zones 40 weakened by the laser beam.

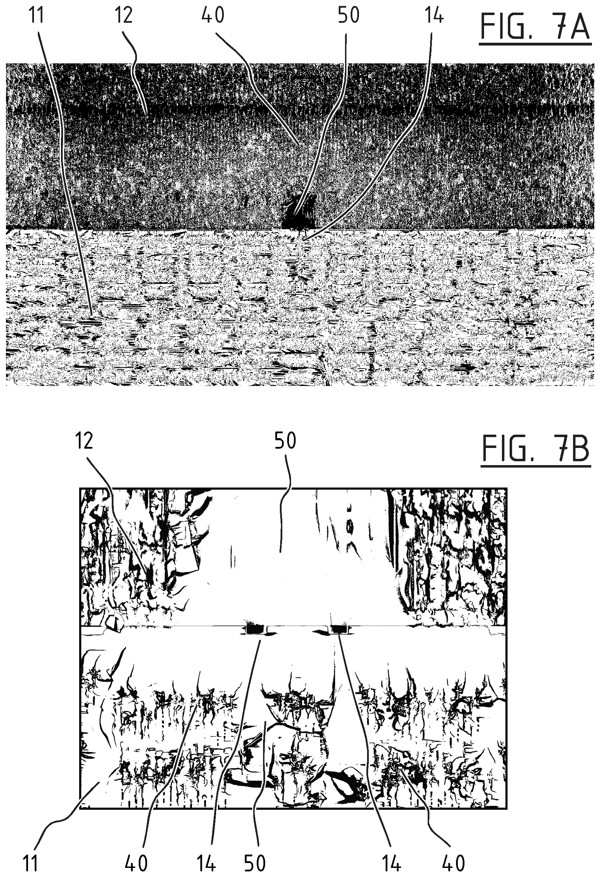

Fig. 7a - 7b show the result of weakening by the laser beam according to an embodiment of the present disclosure. Figs. 7a - 7b are taken in the X-Z plane facing the -Y direction, with Fig. 7b being a detailed view of Fig. 7a. As in Figs. 6a - 6b, the weakening of the wafer in these pictures is carried out simultaneously.

According to the embodiments in Figs. 6a - 6b and 7a - 7b the method of manufacturing of the present disclosure comprises avoiding weakening by the laser beam an undisturbed zone 50 in the cover layer 12 above the at least two nozzle outlets 14 in the depth direction and/or an undisturbed zone 50 in the base layer 11 below the at least two nozzle outlets 14 in the depth direction. An undisturbed zone 50 for example is created by decreasing the power of the laser beam when it passes above the nozzle outlets 14. In addition or alternatively, an undisturbed zone is created by changing a property of the laser beam when it passes above the nozzle outlets 14, for example by changing its frequency. Preferably, the method further comprises locally weakening the cover layer 12 above the undisturbed zone 50 as seen in the depth direction, in particular when this undisturbed zone is in the cover layer 12.

As can be seen in Figs. 6a - 6b, 7b, 9b, and 10a - 10b, after the breaking, at least one of the two nozzle outlets 14 opens up to the outside of the nozzle assembly 10. The nozzle outlet 14 opens up to the X-Z plane.

According to some preferred embodiments the undisturbed zone 50 has at least the same size, preferably at least 1.5 times, more preferably at least 2 times, even more preferably at least 3 times the size of the nozzle outlets 14 in the depth direction.

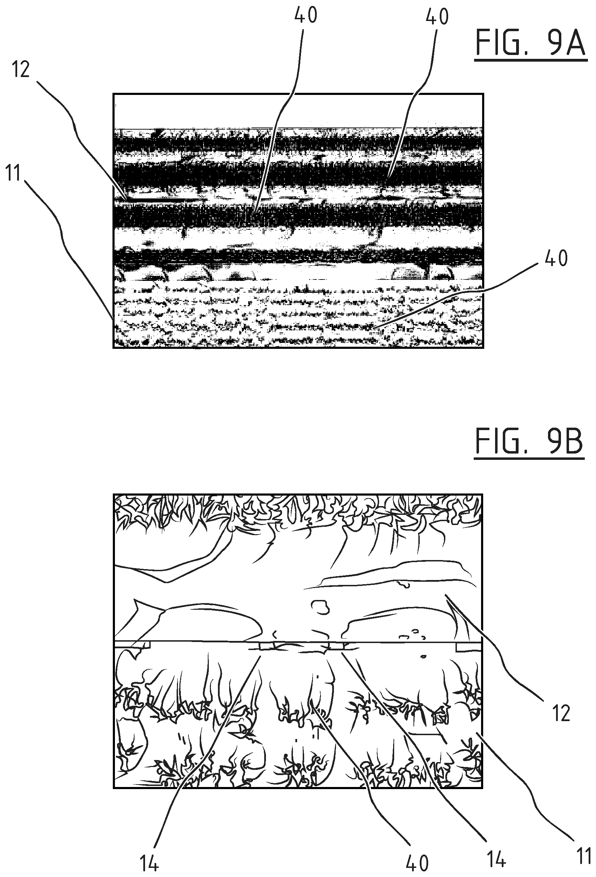

Figs. 9a - 9b show the result of weakening according to the embodiment in Figs. 8a - 8b, with Fig. 9b being a detailed view of Fig. 9a around the region of the nozzle outlets 14. It can be seen that the base layer 11 and the cover layer 12 each comprises several weakened zones 40 in the depth direction.

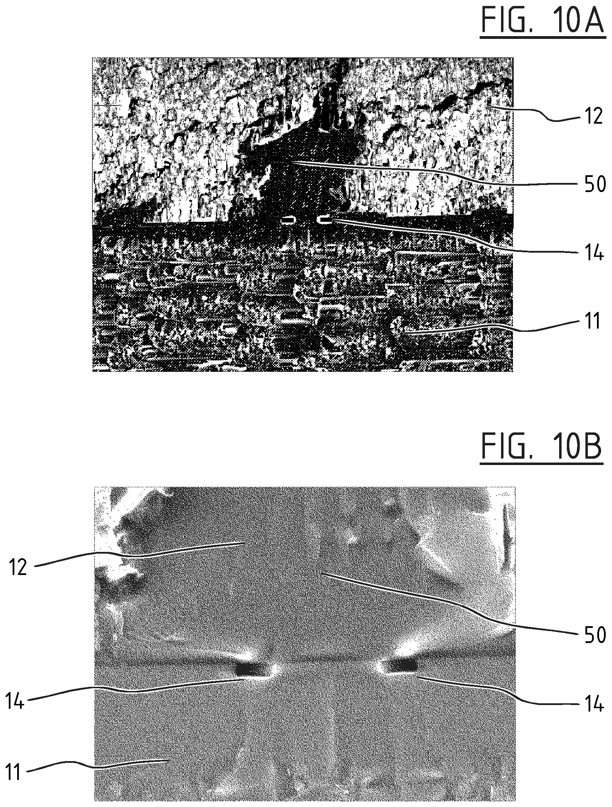

As seen in Figs. 10a - 10b, compared to the results in Fig. 3, thanks to the present disclosure the amount of debris created after one nozzle assembly 10 has been separated from the remaining wafer material is significantly reduced. In the result in Figs. 10a - 10b, after the separation the nozzle outlets 14 remain clear of debris. These two figures also show the undisturbed zone 50 in the cover layer 12 above the at least two nozzle outlets 14 in the depth direction.

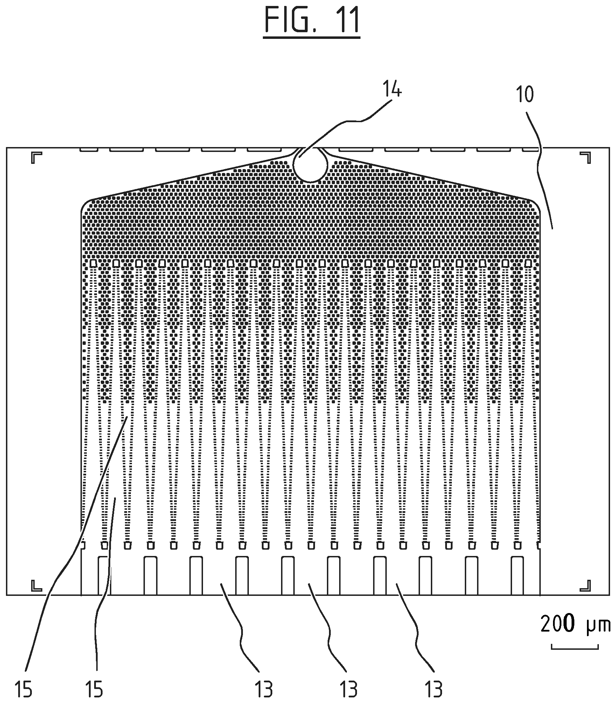

Fig. 11 shows a wafer according to some embodiments of the present disclosure after one nozzle assembly 10 has been separated from the remaining wafer material. The eight nozzle assemblies surrounding the nozzle assembly 10 which has been separated is partially visible. The black thick lines are the gaps between the nozzle assemblies 10 after the separation. The fluid inlets 13 and the nozzle outlets 14 of the central nozzle assembly 10 are visible.

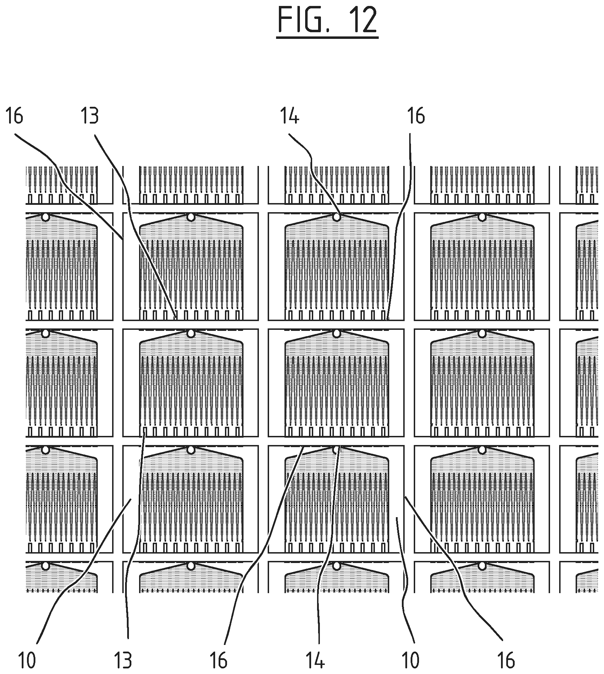

Fig. 12 is a picture of the composite structure after the nozzle assemblies 10 have been separated from each other along the breaking planes 16. The composite structure in Fig. 12 for example corresponds to the composite structure in Fig. 4. In the embodiment of Fig. 12 some breaking planes 16 extend in the X-Z direction and intersect the fluid inlets 13 and/or the nozzle outlets 14. Some breaking planes 16 extend in the Y-Z direction and do not intersect any fluid inlet 13 or nozzle outlet 14. The breaking planes 16 which extend in the Y-Z direction may be made according to the laser weakening method as described in this application or a method which involves using a laser but is different from the laser weakening method in this application or a method which does not involve using a laser.

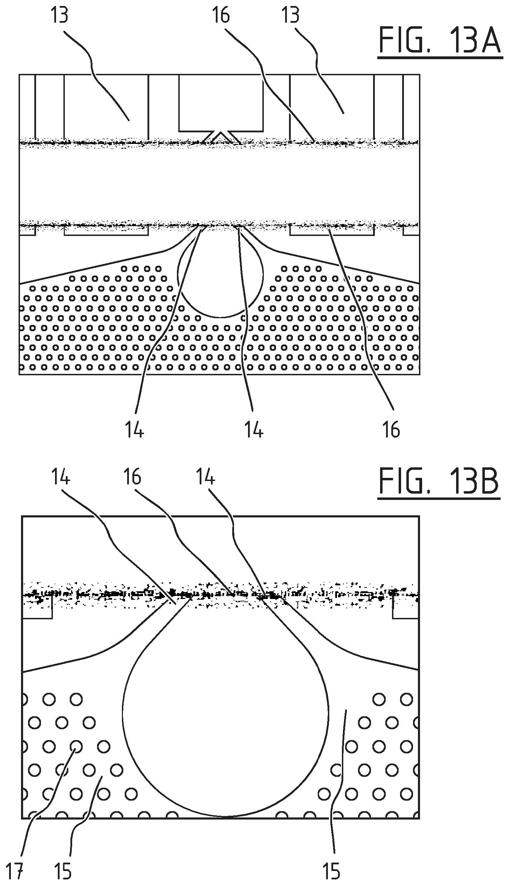

As can be seen more clearly in Figs. 13a - 13b, the breaking plane 16 defined by the at least two weakened zones 40 intersects the channel structures 15 in such a way that upon breaking the base layer 11 and the cover layer 12 along the breaking plane 16, the at least two nozzle outlets 14 of at least one nozzle assembly 10 opens up and/or the at least one fluid inlet 13 of another nozzle assembly 10 opens up. In the embodiment shown in Figs. 13a - 13b, the at least two nozzle outlets 14 of one nozzle assembly 10 and the at least one fluid inlet 13 of another nozzle assembly 10 open up simultaneously when the nozzle assembly 10 is separated from the other nozzle assembly 10 at the breaking plane 16.

As shown in Figs. 13a - 13b, the channel structures 15 are arranged end-to-end in a fluid flow direction (Y-direction in the Figures). Preferably the channel structures 15 are arranged in fluidic connection. The channels corresponding to the at least two nozzle outlets 14 of a first nozzle assembly and/or the channels corresponding to the at least one fluid inlet 13 of a second nozzle assembly intersect the breaking plane 16 and extend beyond it on both sides of the breaking plane 16. This can be seen in Fig. 13a: the fluid inlets 13 of the upper nozzle assembly 10 extend beyond the breaking plane 16 so that a part of the fluid inlets 13 is present on the lower nozzle assembly 10. Similarly, in Fig. 13a the nozzle outlets 14 of the lower nozzle assembly 10 extend beyond the breaking plane 16 so that a part of the nozzle outlets 14 is present on the upper nozzle assembly 10 - see the small triangle in the upper nozzle assembly 10 which is a part of the channels corresponding to the nozzle outlets 14 of the lower nozzle assembly 10.

The invention is also defined by the following clauses:
1. A method of manufacturing at least one nozzle assembly (10) for atomising a fluid, each nozzle assembly (10) comprising a base layer (11), a cover layer (12) stacked on top of the base layer (11) in a depth direction, and at least two nozzle outlets (14) in the base layer (11) configured to release the fluid passing through the nozzle assembly (10) in the form of mutually impinging jets of the fluid, the method comprising:
   a) providing the at least one nozzle assembly (10) pre-arranged in a wafer optionally comprising multiple pre-arranged nozzle assemblies (10); and
   b) separating the at least one nozzle assembly (10) from remaining wafer material, characterised in that
   step b) comprises locally weakening the wafer between the at least one nozzle assembly (10) and the remaining wafer material at at least two focal zones (18) in the depth direction by the focusing of a laser beam (20; 30).
2. The method of clause 1, wherein weakening the wafer comprises weakening the base layer (11) at at least two focal zones (18) in the depth direction, and/or weakening the cover layer (12) at at least two focal zones (18) in the depth direction.
3. The method of any of the previous clauses, wherein the laser beam (20; 30) travels approximately along, preferably in, the depth direction.
4. The method of any of the previous clauses, wherein during the weakening of the base layer (11), the laser beam (20; 30) travels through the cover layer (12).
5. The method of the previous clause, wherein when the laser beam (20; 30) travels through the cover layer (12) it does not substantially change mechanical properties of the cover layer (12).
6. The method of any of the previous clauses, wherein step b) is repeated along a line perpendicular to the depth direction so that the weakened zones (40) defined a weakened plane.
7. The method of any of the previous clauses, wherein the weakening of the wafer at at least two of the at least two focal zones (18) is carried out simultaneously.
8. The method of any of the previous clauses, wherein the focal zones (18) comprise a first focal zone and a second focal zone separated in the propagation direction of the laser beam (20; 30) from the first focal zone by a defocused zone where laser is defocused, wherein the laser beam (20; 30) self-focuses in the first and the second focal zones.
9. The method of any of the previous clauses, wherein at least two of the at least two focal zones (18) are weakened sequentially at two different depths, in respectively a first pass of the laser and a second pass of the laser.
10. The method of the previous clause, wherein the laser beam (20; 30) penetrates the base layer (11) or the cover layer (12) deeper on the first pass than it does on the second pass subsequent to the first pass such that the focal zones (18) created on the first pass of the laser beam (20; 30) is deeper than the focal zones (18) created on the second pass (20; 30).
11. The method of any of the previous clauses, wherein the base layer (11) is made of a first material, for example single-crystal silicon, and the cover layer (12) is made of a second material, for example glass, the second material having a different refractive index than that of the first material.
12. The method of the previous clause, wherein the weakening comprises:
   weakening the base layer (11) by focusing a first laser beam (20); and then
   weakening the cover layer (12) by focusing a second laser beam (30) different from the first laser beam (20).
13. The method of the previous clause, wherein the second laser beam (30) has different properties than the first laser beam (20), the properties include at least one or a combination of: the frequency of the laser beam, the intensity, the pulse frequency, a pulse duration, a dimension of the laser beam such as the diameter, the pulse pitch, the average power density.
14. The method of any of clauses 1 to 10, wherein the base layer (11) and the cover layer (12) are made of the same material, for example glass or silicon.
15. The method of the previous clause, wherein the base layer (11) and cover layer (12) are weakened by laser beams (20; 30) of identical or similar physical properties, such as wavelength, intensity, pulse durations, the pulse frequency, pulse duration, a dimension of the laser beam such as the diameter, the pulse pitch, the average power density, for instance laser beams from the same laser source.
16. The method of any of the previous clauses, further comprising breaking the base layer (11) and/or the cover layer (12) along the at least two focal zones (18).
17. The method of the previous clause, wherein the breaking comprises applying a compressive force in the cover layer (12) and/or an expansive force in the base layer (11).
18. The method of any of the previous two clauses, wherein the interfaces between crystal lattices of the base layer (11) and/or of the cover layer (12) extend approximately in the depth direction.
19. The method of any of the previous clauses, further comprising avoiding weakening by the laser beam an undisturbed zone (50) in the cover layer (12) above the at least two nozzle outlets (14) in the depth direction and/or an undisturbed zone (50) in the base layer (11) below the at least two nozzle outlets (14) in the depth direction.
20. The method of clause 19, further comprising locally weakening the cover layer (12) above the undisturbed zone (50) as seen in the depth direction.
21. The method of any of the previous two clauses, wherein the undisturbed zone (50) has at least the same size, preferably at least 1.5 times, more preferably at least 2 times, even more preferably at least 3 times the size of the nozzle outlets (14) in the depth direction.
22. The method of any of clauses 16 to 21, wherein after the breaking at least one of the two nozzle outlets (14) opens up to the outside of the nozzle assembly (10).
23. The method of any of the previous clauses for manufacturing at least two of the nozzle assemblies (10), each comprising at least one fluid inlet (13) configured to receive fluid, the fluid inlet (13) and the two nozzle outlets (14) defining a fluid flow direction, wherein at least two of the nozzle assemblies (10) are connected end-to-end in the fluid flow direction, wherein the method comprises opening the at least one fluid inlet (13) and/or the nozzle outlets (14), preferably simultaneously, by separating two of the nozzle assemblies (10) from each other.
24. A composite structure, comprising a base layer (11), a cover layer (12) stacked on the base layer (11) in a depth direction, and at least two channel structures (15) each defined in a different part of the composite structure in a plan view, the different parts being integral to the same base layer (11) and cover layer (12), each channel structure (15) being suitable for forming, after separation from the other, a nozzle assembly (10) for atomising a fluid, wherein each nozzle assembly (10) comprises at least two nozzle outlets (14) in the base layer (11) configured to release the fluid passing through the nozzle assembly (10) in the form of mutually impinging jets of the fluid, and each nozzle assembly (10) comprising at least one fluid inlet (13), each channel structure (15) comprising channels corresponding to the at least two nozzle outlets (14) and at least one fluid inlet (13) of a respective nozzle assembly (10), characterised in that
   the composite structure comprises at least two weakened zones (40) in the depth direction.
25. The composite structure of the previous clause, wherein a breaking plane (16) defined by the at least two weakened zones (40) intersects the channel structures (15) in such a way that upon breaking the base layer (11) and the cover layer (12) along the breaking plane (16), the at least two nozzle outlets (14) of at least one nozzle assembly (10) opens up and/or the at least one fluid inlet (13) of another nozzle assembly (10) opens up.
26. The composite structure of the previous clause, wherein the channel structures (15) are arranged end-to-end in a fluid flow direction, preferably in fluidic connection, wherein the channels corresponding to the at least two nozzle outlets (14) of a first nozzle assembly (10) and/or the channels corresponding to the at least one fluid inlet (13) of a second nozzle assembly (10) intersect the breaking plane (16) and extend beyond it on both sides of the breaking plane (16).
27. The composite structure of any of clauses 24 to 26, wherein at least one of the channel structures (15) comprises a filter (17) between the at least one fluid inlet (13) and the at least two nozzle outlets (14).
28. A nozzle assembly (10) obtained by a method of any of clauses 1 to 23.

## Claims

1. A method of manufacturing at least one nozzle assembly (10) for atomising a fluid, each nozzle assembly (10) comprising a base layer (11), a cover layer (12) stacked on top of the base layer (11) in a depth direction, and at least two nozzle outlets (14) in the base layer (11) configured to release the fluid passing through the nozzle assembly (10) in the form of mutually impinging jets of the fluid, the method comprising:
a) providing the at least one nozzle assembly (10) pre-arranged in a wafer optionally comprising multiple pre-arranged nozzle assemblies (10); and
b) separating the at least one nozzle assembly (10) from remaining wafer material,
**characterised in that**
step b) comprises locally weakening the wafer between the at least one nozzle assembly (10) and the remaining wafer material at at least two focal zones (18) in the depth direction by the focusing of a laser beam (20; 30).

2. The method of claim 1, wherein weakening the wafer comprises weakening the base layer (11) at at least two focal zones (18) in the depth direction, and/or weakening the cover layer (12) at at least two focal zones (18) in the depth direction.

3. The method of any of the previous claims, wherein:
- the laser beam (20; 30) travels approximately along, preferably in, the depth direction; and/or
- the weakening of the wafer at at least two of the at least two focal zones (18) is carried out simultaneously; and/or
- the focal zones (18) comprise a first focal zone and a second focal zone separated in the propagation direction of the laser beam (20; 30) from the first focal zone by a defocused zone where laser is defocused, wherein the laser beam (20; 30) self-focuses in the first and the second focal zones
- step b) is repeated along a line perpendicular to the depth direction so that the weakened zones (40) defined a weakened plane.

4. The method of any of the previous claims, wherein during the weakening of the base layer (11), the laser beam (20; 30) travels through the cover layer (12),
wherein optionally when the laser beam (20; 30) travels through the cover layer (12) it does not substantially change mechanical properties of the cover layer (12).

5. The method of any of the previous claims, wherein at least two of the at least two focal zones (18) are weakened sequentially at two different depths, in respectively a first pass of the laser and a second pass of the laser,
wherein optionally the laser beam (20; 30) penetrates the base layer (11) or the cover layer (12) deeper on the first pass than it does on the second pass subsequent to the first pass such that the focal zones (18) created on the first pass of the laser beam (20; 30) is deeper than the focal zones (18) created on the second pass (20; 30).

6. The method of any of the previous claims, wherein the base layer (11) is made of a first material, for example single-crystal silicon, and the cover layer (12) is made of a second material, for example glass, the second material having a different refractive index than that of the first material.

7. The method of the previous claim, wherein the weakening comprises:
weakening the base layer (11) by focusing a first laser beam (20); and then weakening the cover layer (12) by focusing a second laser beam (30) different from the first laser beam (20),
wherein optionally the second laser beam (30) has different properties than the first laser beam (20), the properties include at least one or a combination of: the frequency of the laser beam, the intensity, the pulse frequency, a pulse duration, a dimension of the laser beam such as the diameter, the pulse pitch, the average power density.

8. The method of any of claims 1 to 5, wherein the base layer (11) and the cover layer (12) are made of the same material, for example glass or silicon, wherein optionally the base layer (11) and cover layer (12) are weakened by laser beams (20; 30) of identical or similar physical properties, such as wavelength, intensity, pulse durations, the pulse frequency, pulse duration, a dimension of the laser beam such as the diameter, the pulse pitch, the average power density, for instance laser beams from the same laser source.

9. The method of any of the previous claims, further comprising:
- breaking the base layer (11) and/or the cover layer (12) along the at least two focal zones (18), wherein preferably the interfaces between crystal lattices of the base layer (11) and/or of the cover layer (12) extend approximately in the depth direction,
wherein optionally the breaking comprises applying a compressive force in the cover layer (12) and/or an expansive force in the base layer (11);
and/or
- avoiding weakening by the laser beam an undisturbed zone (50) in the cover layer (12) above the at least two nozzle outlets (14) in the depth direction and/or an undisturbed zone (50) in the base layer (11) below the at least two nozzle outlets (14) in the depth direction, wherein preferably the undisturbed zone (50) has at least the same size, preferably at least 1.5 times, more preferably at least 2 times, even more preferably at least 3 times the size of the nozzle outlets (14) in the depth direction,
optionally further comprising locally weakening the cover layer (12) above the undisturbed zone (50) as seen in the depth direction.

10. The method of the previous claim, comprising the breaking of the base layer (11) and/or the cover layer (12), wherein after the breaking at least one of the two nozzle outlets (14) opens up to the outside of the nozzle assembly (10).

11. The method of any of the previous claims for manufacturing at least two of the nozzle assemblies (10), each comprising at least one fluid inlet (13) configured to receive fluid, the fluid inlet (13) and the two nozzle outlets (14) defining a fluid flow direction, wherein at least two of the nozzle assemblies (10) are connected end-to-end in the fluid flow direction, wherein the method comprises opening the at least one fluid inlet (13) and/or the nozzle outlets (14), preferably simultaneously, by separating two of the nozzle assemblies (10) from each other.

12. A composite structure, comprising a base layer (11), a cover layer (12) stacked on the base layer (11) in a depth direction, and at least two channel structures (15) each defined in a different part of the composite structure in a plan view, the different parts being integral to the same base layer (11) and cover layer (12), each channel structure (15) being suitable for forming, after separation from the other, a nozzle assembly (10) for atomising a fluid, wherein each nozzle assembly (10) comprises at least two nozzle outlets (14) in the base layer (11) configured to release the fluid passing through the nozzle assembly (10) in the form of mutually impinging jets of the fluid, and each nozzle assembly (10) comprising at least one fluid inlet (13), each channel structure (15) comprising channels corresponding to the at least two nozzle outlets (14) and at least one fluid inlet (13) of a respective nozzle assembly (10),
**characterised in that**
the composite structure comprises at least two weakened zones (40) in the depth direction.

13. The composite structure of the previous claim, wherein a breaking plane (16) defined by the at least two weakened zones (40) intersects the channel structures (15) in such a way that upon breaking the base layer (11) and the cover layer (12) along the breaking plane (16), the at least two nozzle outlets (14) of at least one nozzle assembly (10) opens up and/or the at least one fluid inlet (13) of another nozzle assembly (10) opens up,
wherein optionally the channel structures (15) are arranged end-to-end in a fluid flow direction, preferably in fluidic connection, wherein the channels corresponding to the at least two nozzle outlets (14) of a first nozzle assembly (10);
and/or wherein optionally the channels corresponding to the at least one fluid inlet (13) of a second nozzle assembly (10) intersect the breaking plane (16) and extend beyond it on both sides of the breaking plane (16).

14. The composite structure of any of claims 12 to 13, wherein at least one of the channel structures (15) comprises a filter (17) between the at least one fluid inlet (13) and the at least two nozzle outlets (14).

15. A nozzle assembly (10) obtained by a method of any of claims 1 to 11.
